# EUROPEAN PATENT APPLICATION

(11) **EP 3 407 583 A1**
(43) Date of publication of application: **28.11.2018**
(21) Application number: 18173637.2
(22) Date of filing: 22.05.2018
(51) Int. Cl.: H04M 1/725

(54) **METHOD AND DEVICE FOR SWITCHING DISPLAY MODE**

(30) Priority: 22.05.2017 CN 201710364257
(71) Applicant: Beijing Xiaomi Mobile Software Co., Ltd., Beijing 100085 (CN)
(72) Inventor: WANG, Chenxi, Beijing, Beijing 100085 (CN); GAO, Chengxing, Beijing, Beijing 100085 (CN); YAN, Zheng, Beijing, Beijing 100085 (CN)
(74) Representative: dompatent von Kreisler Selting Werner - Partnerschaft von Patent- und Rechtsanwälten mbB

(57) **Abstract**

The present disclosure discloses a method and a device for switching a display mode, relating to a mobile terminal field. The method includes: obtaining a first display mode of an operating system (101); and when the first display mode of the operating system is a night mode, switching a second display mode of an application to an application night mode (102). It is solved that operations are very complicated caused by that the user should manually activate the application night mode of each application in the night, and manually deactivate the application night mode of each application in the daytime when multiple applications are used, and it achieves an effect of automatically switching the second display mode of each application according to the first display mode of the operating system and simplifying user's operations.

## Description

### TECHNICAL FIELD

The present disclosure generally relates to a mobile terminal field, and more particularly, to a method and a device for switching a display mode.

### BACKGROUND

When a mobile phone is used in the night the high brightness contrast between a mobile phone screen and the dark light environment may cause a great stimulus to the user's eyes as the ambient light is very low. Thus, the high brightness contrast from the mobile phone screen may damage the user's eyesight.

In order to reduce the potential damage to the eyesight from the mobile phone screen when the user uses the mobile phone in the night, some mobile applications provide a night mode. Comparing with a normal mode of the application, the night mode is a display mode customized to be used in low light environment. The application usually provides a switch of the night mode for the user. When the user switches on the switch of the night mode in a specific application, a user interface of the specific application may turn to dark colored, and backlight brightness may be reduced, thus reducing the brightness contrast between the brightness of the mobile phone screen and the brightness of surrounding light environment.

However, when the user uses multiple applications, the user has to manually activate the night mode of each application in the night, and manually deactivate the night mode of each application in the daytime, which makes operations very complicated and cumbersome to the user.

### SUMMARY

In order to solve a problem that a user should manually activate a night mode of each application in the night, and manually deactivate the night mode of each application in the daytime when the user uses multiple applications, causing very complicated operations, embodiments of the present disclosure provide a method and a device for switching a display mode.

According to a first aspect of embodiments of the present disclosure, there is provided a method for switching a display mode. The method includes: obtaining a first display mode of an operating system; and when the first display mode of the operating system is a night mode, switching a second display mode of an application to an application night mode.

In some embodiments, obtaining a first display mode of an operating system includes: when the application starts up, inquiring the first display mode of the operating system; and/or, when the application is running, receiving a notification message sent from the operating system, and determining the first display mode of the operating system according to the notification message, in which the notification message is sent by the operating system when the first display mode is switched.

In some embodiments, determining the first display mode of the operating system according to the notification message includes: when the notification message is received, inquiring the first display mode of the operating system, in which the notification message is used to trigger the application to inquire the first display mode of the operating system; or, obtaining the first display mode of the operating system by parsing the notification message, in which the notification message is used to notify the application of the first display mode of the operating system.

In some embodiments, before receiving a notification message sent from the operating system, the method further includes: when the application starts up, sending a statement to the operating system according to a preset identification in a header file of the application, in which the statement is used to notify the operating system that the application supports the application night mode usable in the application.

In some embodiments, switching a second display mode of an application to an application night mode includes: transforming a hue of a user interface of the application to a preset hue according to mode parameters of the application night mode; and/or, adding a layer with a preset transparency on the user interface of the application; in which, the preset hue corresponds to the application night mode.

In some embodiments, after obtaining a first display mode of an operating system, the method further includes: when the first display mode of the operating system is a normal mode, switching the second display mode of the application to the normal mode.

According to a second aspect of embodiments of the present disclosure, there is provided a device for switching a display mode. The device includes: an obtaining module, configured to obtain a first display mode of an operating system; and a first switching module, configured to switch a second display mode of an application to an application night mode when the first display mode of the operating system obtained by the obtaining module is a night mode.

In some embodiments, the obtaining module includes: an inquiring sub module, configured to inquire the first display mode of the operating system when the application starts up; and a determining sub module, configured to receive a notification message sent from the operating system when the application is running, and to determine the first display mode of the operating system according to the notification message, in which the notification message is sent by the operating system when the first display mode is switched.

In some embodiments, the determining sub module is configured to: when the notification message is received, inquire the first display mode of the operating system, in which the notification message is used to trigger the application to inquire the first display mode of the operating system; or obtain the first display mode of the operating system by parsing the notification message, in which the notification message is used to notify the application of the first display mode of the operating system.

In some embodiments, the device further includes: a stating module, configured to send a statement to the operating system according to a preset identification in a header file of the application when the application starts up, in which the statement is used to notify the operating system that the application supports the application night mode usable in the application.

In some embodiments, the first switching module is configured to: transform a hue of a user interface of the application to a preset hue according to mode parameters of the application night mode; and/or, add a layer with a preset transparency on the user interface of the application; in which the preset hue corresponds to the application night mode.

In some embodiments, the device further includes: a second switching module, configured to switch the second display mode of the application to a normal mode when the first display mode of the operating system obtained by the obtaining module is the normal mode.

According to a third aspect of embodiments of the present disclosure, there is provided a device for switching a display mode. The device includes: a processor; and a memory for storing instructions executable by the processor; in which the processor is configured to: obtain a first display mode of an operating system; and when the first display mode of the operating system is a night mode, switch a second display mode of an application to an application night mode.

According to a fourth aspect of embodiments of the present disclosure, there is provided a non-transitory computer-readable storage medium having stored therein instructions that, when executed by a processor, causes the processor to: obtain a first display mode of an operating system; and when the first display mode of the operating system is a night mode, switch a second display mode of an application to an application night mode.

The technical solution provided by embodiments of the present disclosure may have following advantages.

By switching the second display mode of the application to a display mode consistent with the first display mode of the operating system, a user only needs to operate the first display mode of the operating system, such that the second display mode of each application can be controlled to be switched automatically, thus avoiding manual switch operations performed on each application by the user. Furthermore, a problem is solved that the operations are very complicated caused by that the user should manually activate the night mode of each application in the night, and manually deactivate the night mode of each application in the daytime when multiple applications are used, and an effect is achieved that the second display mode of each application is automatically switched according to the first display mode of the operating system, thereby simplifying user's operations, and improving switching efficiency of the second display mode.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for switching a display mode according to an exemplary embodiment.
Fig. 2 is a flow chart showing a method for switching a display mode according to another exemplary embodiment.
Fig. 3 is a schematic diagram illustrating that an application is switched from a normal mode to a night mode according to an exemplary embodiment.
Fig. 4 is a flow chart showing a method for switching a display mode according to still another exemplary embodiment.
Fig. 5 is a block diagram of a device for switching a display mode according to an exemplary embodiment.
Fig. 6 is a block diagram of a device for switching a display mode according to another exemplary embodiment.
Fig. 7 is a block diagram of a terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

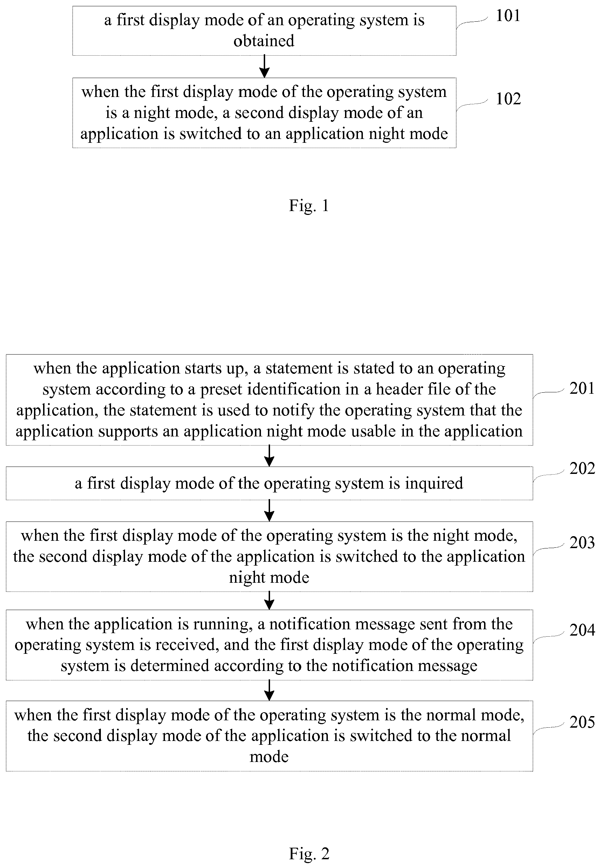

Fig. 1 is a flow chart showing a method for switching a display mode according to an exemplary embodiment. Referring to Fig. 1, an example method for switching a display mode is applied to at least one application installed in a terminal. The method for switching the display mode may include following actions.

In act 101, a first display mode of an operating system is obtained. The display mode may be one of the following modes: a daytime mode; a night mode; and a customized mode. The daytime mode may be configured for reading during the daytime when ambient light is relatively strong. The night mode may be configured for reading during the night when ambient light is relatively weak. The customized mode may be configured for reading indoors during the daytime when ambient light is neither strong nor weak.

In act 102, when the first display mode of the operating system is a night mode, a second display mode of an application is switched to an application night mode. The operating system may be running on a terminal while the application may be installed in the same terminal. Further, the application may be installed on a second device paired with the terminal. For example, the second device may be a smart TV, a smart watch, a smart router, or other devices paired with the terminal preferably using Bluetooth, WiFi, or other wireless communication technology.

In conclusion, with the method for switching a display mode provided by embodiments of the present disclosure, by switching the second display mode of the application to a display mode consistent with the first display mode of the operating system, a user only needs to operate the first display mode of the operating system, such that the second display mode of each application can be controlled to be switched automatically, thus avoiding manual switch operations performed on each application by the user. Furthermore, a problem is solved that the operations are very complicated caused by that the user should manually activate the night mode of each application in each individual device in the night, and manually deactivate the night mode of each application in the daytime when multiple applications are used, and an effect is achieved that the second display mode of each application is automatically switched according to the first display mode of the operating system, thereby simplifying user's operations, and improving switching efficiency of the second display mode in one or more paired devices.

Fig. 2 is a flow chart showing a method for switching a display mode according to another exemplary embodiment. Referring to Fig. 2, it is taken as an example for illustration that the method for switching a display mode is applied to at least one application installed in a terminal. The method for switching a display mode may include following actions.

In act 201, when the application starts up, a statement is sent to an operating system according to a preset identification in a header file of the application. The statement is used to notify the operating system that the application supports an application night mode usable in the application.

The application is a third-party application that is from a third party and supports the application night mode. Each of the night mode and the application night mode is a display mode suitable for illumination intensity less than a preset value. The third party is usually a software developer different from a user and a provider of the operating system. However, in some embodiments, the third party for developing the third-party application is the developer of the operating system.

A research and development engineer of the third-party application and that of the operating system may negotiate with each other in advance such that the research and development engineer of the third-party application adds the preset identification in the preset header file of the application. The preset identification is used to indicate that the application supports the application night mode usable in the application. The statement refers to that the operating system can read the preset identification of the application when the application starts up, such that the operating system may know that the application supports the application night mode usable in the application.

For example, if the preset identification is name="support_**ui_night_mode", value="true", where **ui is a name of an operating system supported by the third-party application, it can be determined according to the preset identification that the third-party application supports the application night mode usable in the application.

In act 202, a first display mode of the operating system is inquired.

The first display mode is a display mode on system-level.

When the third-party application starts up, the first display mode of the operating system can be automatically inquired.

In some embodiments, there is a switch for switching the first display mode provided in the operating system. The user can manually control the switch to determine the first display mode of the operating system. The first display mode is valid for both the operating system and the applications running in the operating system.

For example, the operating system provides a global switch of the night mode for the user, and adds codes of a key of "**ui_night_mode_enabled" with a value of 0 or 1 to a program corresponding to setting up resource. **ui is the name of the operating system, the value of 1 represents to activate the night mode of the operating system, and the value of 0 represents to deactivate the night mode of the operating system. The night mode is deactivated by default. When the switch is switched, the value may be changed. The application can determine the first display mode corresponding to the operating system by reading the value corresponding to the switch of the night mode.

The first display mode of the operating system includes the night mode and a normal mode. The night mode is a display mode suitable for illumination intensity less than a first value. The normal mode is a display mode suitable for the illumination intensity larger than a second value. The fist value is same as or different from the second value.

In some embodiments, the operating system does not provide the switch for switching the first display mode. The operating system automatically switches the first display mode according to the illumination intensity detected. When the illumination intensity is less than the first value, the operating system switches the first display mode to the night mode, and when the illumination intensity is larger than the second value, the operating system switches the first display mode to the normal mode. The fist value is same as or different from the second value.

In act 203, when the first display mode of the operating system is the night mode, the second display mode of the application is switched to the application night mode.

The second display mode is a display mode on application-level.

Since the application is a third-party application that supports the application night mode usable in the application, there are mode parameters of the application night mode stored in the application. When the application enters the application night mode, the switch to the application night mode is performed automatically by the application according to the mode parameters of the application night mode provided by the application itself.

In some embodiments, when the second display mode is switched to the application night mode by the application, a hue of a user interface of the application is transformed to a preset hue according to the mode parameters of the application night mode, and/or, a layer with a preset transparency is added on the user interface of the application.

The preset hue is a hue corresponding to the application night mode.

The hue of the user interface is at least one color contained in the user interface of the application. For example, background of the user interface is black, buttons and controllers in the user interface are dark gray, and words in the user interface are light gray. The hues of different elements in the user interface are transformed to corresponding colors according to the mode parameters of the application night mode.

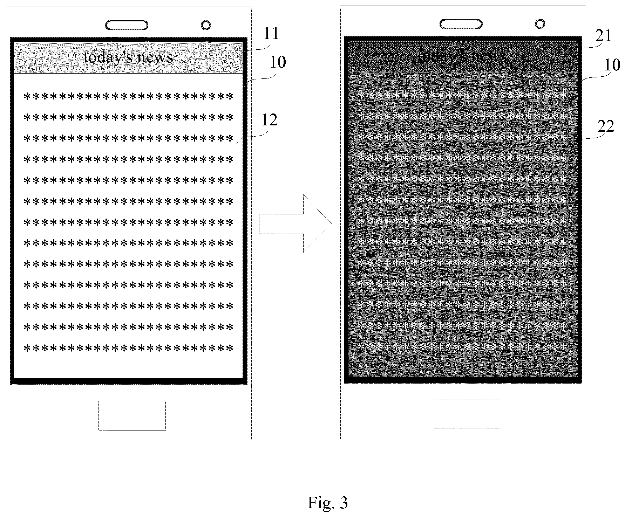

In combination with and referring to Fig. 3, a user interface of a reading application is displayed on a display screen 10. The user interface includes a title area 11 and a body area 12. When the second display mode of the reading application is the normal mode, the color of the background of the title area 11 is greyish-white, the color of the background of the body area 12 is white, and the color of the words in the title area 11 is black. When the second display mode of the reading application is switched to the application night mode from the normal mode, the color of the background of the title area 21 is changed to dark gray, the color of the background of the body area 22 is light gray, and the color the words is greyish-white.

In some embodiments, for different elements in the user interface, transparencies of added layers are different. For example, a layer with a first transparency is added to the background of the user interface, and a layer with a second transparency is added to the buttons and controllers of the user interface. For each of the different elements in the user interface, a layer with a corresponding transparency is added according to the mode parameters of the application night mode.

A value range of the transparency is from 0 to 1, where, 0 represents completely transparent, and 1 represents opaque.

In some embodiments, when the application night mode is switched to, the added layer is usually a black layer.

In some embodiments, as another branch of act 202, when the first display mode of the operating system is the normal mode, the second display mode is switched to the normal mode by the application.

In a possible implementation, when the second display mode of the application is the normal mode, and if the first display mode of the operating system is switched to the normal mode, the second display mode of the application remains unchanged.

In act 204, when the application is running, a notification message sent from the operating system is received, and the first display mode of the operating system is determined according to the notification message.

The notification message is sent by the operating system when the first display mode is switched.

In a process that the application is running, when the first display mode the operating system is changed, for example, the user manually switches the switch of the first display mode, or the operating system switches the first display mode when the operating system detects a change in the illumination intensity (from a value less than a preset value to a value larger than the preset value, or from a value larger than the preset value to a value less than the preset value), the operating system may send the notification message to the application to inform the application to switch the second display mode of the application.

In some embodiments, the operating system sends the notification message to the application that has stated to support the application night mode usable in the application. For example, there are 10 applications installed in the operating system, of which 6 applications supports respective application night modes usable in respective applications, and 4 applications does not support the application night modes. The operating system sends the notification message to the 6 applications when the first display mode is switched. In another example, when a paired device has 5 applications supporting night mode, the operating system may send a message to the paired device so that the paired device may switch the display mode of the 5 applications in the paired device.

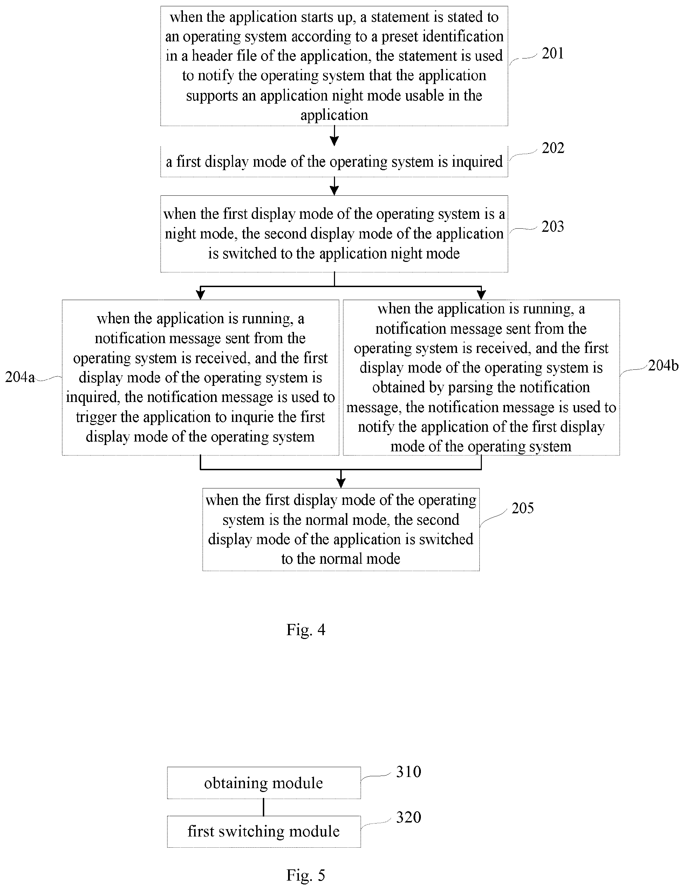

In some embodiments, in combination with and referring to Fig. 4, the act 204 may be replaced by following actions.

In act 204a, when the application is running, a notification message sent from the operating system is received. The first display mode of the operating system is inquired when the notification message is received. The notification message is used to trigger the application to inquire the first display mode of the operating system.

Under a possible situation, the notification message sent by the operating system is used to trigger the application to inquire the first display mode of the operating system again.

If the operating system sends the notification message when the first display mode is switched from the night mode to the normal mode, the first display mode of the operating system inquired by the application is the normal mode when the application receives the notification message. If the operating system sends the notification message when the first display mode is switched from the normal mode to the night mode, the first display mode of the operating system inquired by the application is the night mode when the application receives the notification message.

In act 204b, when the application is running, a notification message sent from the operating system is received, and the first display mode of the operating system is obtained by parsing the notification message. The notification message is used to notify the application of the first display mode of the operating system.

Under another possible situation, as the notification message sent from the operating system contains a current first display mode of the operating system, the application can obtain the first display mode of the operating system by parsing the notification message.

If the operating system sends the notification message when the first display mode is switched from the night mode to the normal mode, and the current first display mode of the operating system contained in the notification message is the normal mode, the first display mode of the operating system obtained by parsing the notification message is the normal mode when the application receives the notification message. If the operating system sends the notification message when the first display mode is switched from the normal mode to the night mode, the first display mode of the operating system obtained by parsing the notification message is the night mode when the application receives the notification message.

In act 205, when the first display mode of the operating system is the normal mode, the second display mode of the application is switched to the normal mode.

Corresponding to act 203, if the first display mode of the operating system inquired by the application in act 203 is the normal mode, the second display mode of the application is switched to the normal mode, or the second display mode of the application remains to be the normal mode. Then when the first display mode of the operating system is changed in act 204 (that is, the first display mode of the operating system is switched from the normal mode to the night mode), the first display mode of the operating system obtained by the application is the night mode. As another branch of act 204, when the first display mode of the operating system is the night mode, the application switches the second display mode to the application night mode.

In conclusion, with the method for switching a display mode provided by embodiments of the present disclosure, by switching the second display mode of the application to a display mode consistent with the first display mode of the operating system, the user only needs to operate the first display mode of the operating system, such that the second display mode of each application can be controlled to be switched automatically, thus avoiding manual switch operations performed on each application by the user. Furthermore, a problem is solved that the operations are very complicated caused by that the user should manually activate the night mode of each application in the night, and manually deactivate the night mode of each application in the daytime when multiple applications are used, and an effect is achieved that the second display mode of each application is automatically switched according to the first display mode of the operating system, thereby simplifying user's operations, and improving switching efficiency of the second display mode.

For act 201, the application informs the operating system that the application supports the application night mode usable in the application, such that the operating system does not need to operate the application when the application is to be switched to the application night mode, and the application just needs to enter the application night mode according to its own mode parameters.

For acts 204 to 205, the notification message is sent to the application by the operating system when the first display mode is switched, such that the second display mode of the application is switched followed by the switch of the first display mode of the operating system, thus avoiding that the user switches the second display mode of each application, and simplifying user's operations.

Following are device embodiments of the present disclosure, which can be used to perform the method embodiments of the present disclosure. For details that are not disclosed in the device embodiments of the present disclosure, reference is made to the method embodiments of the present disclosure.

Fig. 5 is a block diagram of a device for switching a display mode according to an exemplary embodiment. Referring to Fig. 5, it is taken as an example for illustration that the device for switching a display mode is applied to at least one application installed in a terminal. The device for switching a display mode includes but is not limited to an obtaining module 310 and a first switching module 320.

The obtaining module 310 is configured to obtain a first display mode of an operating system.

The first switching module 320 is configured to switch a second display mode of an application to an application night mode when the first display mode of the operating system obtained by the obtaining module 310 is a night mode.

In conclusion, with the device for switching a display mode provided by embodiments of the present disclosure, by switching the second display mode of the application to a display mode consistent with the first display mode of the operating system, a user only needs to operate the first display mode of the operating system, such that the second display mode of each application can be controlled to be switched automatically, thus avoiding manual switch operations performed on each application by the user. Furthermore, a problem is solved that the operations are very complicated caused by that the user should manually activate the night mode of each application in the night, and manually deactivate the night mode of each application in the daytime when the user uses multiple applications, and an effect is achieved that the second display mode of each application is automatically switched according to the first display mode of the operating system, thereby simplifying user's operations, and improving switching efficiency of the second display mode.

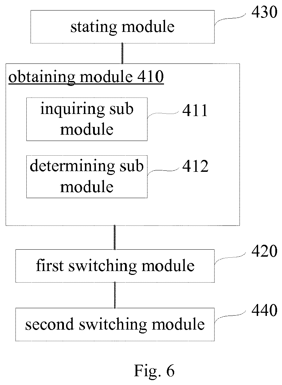

Fig. 6 is a block diagram of a device for switching a display mode according to another exemplary embodiment. Referring to Fig. 6, it is taken as an example for illustration that the device for switching a display mode is applied to at least one application installed in a terminal. The device for switching a display mode includes but is not limited an obtaining module 410 and a first switching module 420.

The obtaining module 410 is configured to obtain a first display mode of an operating system.

The first switching module 420 is configured to switch a second display mode of an application to an application night mode when the first display mode of the operating system obtained by the obtaining module 410 is a night mode.

In some embodiments, the obtaining module 410 includes an inquiring sub module 411 and a determining sub module 412.

The inquiring sub module 411 is configured to inquire the first display mode of the operating system when the application starts up.

The determining sub module 412 is configured to receive a notification message sent from the operating system when the application is running, and to determine the first display mode of the operating system according to the notification message. The notification message is sent by the operating system when the first display mode is switched.

In some embodiments, the determining sub module 412 is configured to inquire the first display mode of the operating system when the notification message is received. The notification message is used to trigger the application to inquire the first display mode of the operating system. In some embodiments, the determining sub module 412 is configured to obtain the first display mode of the operating system by parsing the notification message. The notification message is used to notify the application of the first display mode of the operating system.

In some embodiments, the device for switching a display mode further includes a stating module 430.

The stating module 430 is configured to send a statement to the operating system according to a preset identification in a header file of the application when the application starts up. The statement is used to notify the operating system that the application supports the application night mode usable in the application.

In some embodiments, the first switching module 420 is configured to transform a hue of a user interface of the application to a preset hue according to mode parameters of the application night mode; and/or, to add a layer with a preset transparency on the user interface of the application. The preset hue corresponds to the application night mode.

In some embodiments, the device for switching a display mode further includes a second switching module 440.

The second switching module 440 is configured to switch the second display mode of the application to a normal mode when the first display mode of the operating system obtained by the obtaining module 410 is the normal mode.

In conclusion, with the device for switching a display mode provided by embodiments of the present disclosure, by switching the second display mode of the application to a display mode consistent with the first display mode of the operating system, a user only needs to operate the first display mode of the operating system, such that the second display mode of each application can be controlled to be switched automatically, thus avoiding manual switch operations performed on each application by the user. Furthermore, a problem is solved that the operations are very complicated caused by that the user should manually activate the night mode of each application in the night, and manually deactivate the night mode of each application in the daytime when multiple applications are used, and an effect is achieved that the second display mode of each application is automatically switched according to the first display mode of the operating system, thereby simplifying user's operations, and improving switching efficiency of the second display mode.

The application informs the operating system that the application supports the application night mode usable in the application, such that the operating system does not need to operate the application when the application is switched to the application night mode, and the application just needs to enter the application night mode according to its own mode parameters.

The notification message is sent to the application by the operating system when the first display mode is switched, such that the second display mode of the application is switched followed by the switch of the first display mode of the operating system, thus avoiding that the user switches the second display mode of each application, and simplifying user's operations.

With respect to the devices in the above embodiments, the specific manners for performing operations for individual modules therein have been described in detail in the embodiments regarding the embodiments of the related methods, which are not be elaborated herein.

A exemplary embodiment of the present disclosure provides a device for switching a display mode, which can realize the method for switching a display mode provided in embodiments of the present disclosure. The device for switching a display mode includes a processor and a memory for storing instructions executable by the processor.

The processor is configured to obtain a first display mode of an operating system; and to switch a second display mode of an application to an application night mode when the first display mode of the operating system is a night mode.

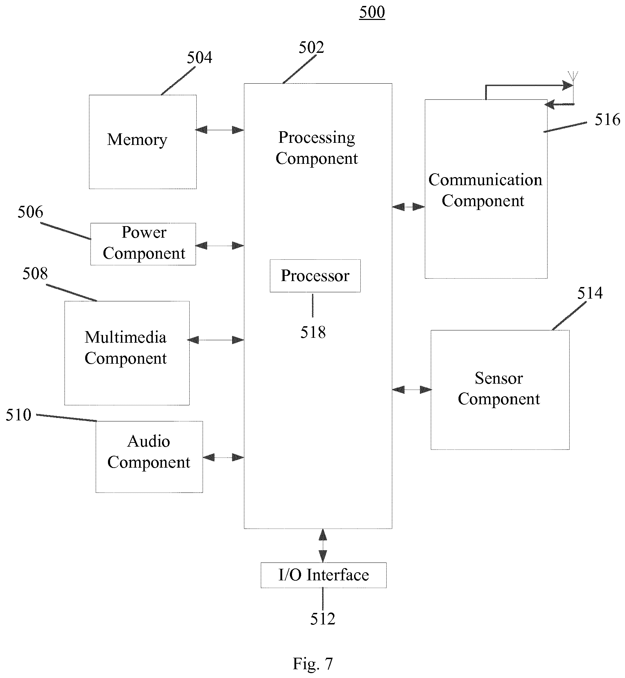

Fig. 7 is a block diagram of a terminal according to an exemplary embodiment. For example, the terminal 500 may be a mobile phone, a computer, a digital broadcast terminal, a messaging device, a gaming console, a tablet, a medical device, exercise equipment, a personal digital assistant, and the like.

Referring to Fig. 7, the terminal 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the terminal 500, such as the operations associated with display, telephone calls, data communications, camera operations, and recording operations. The processing component 502 may include one or more processors 518 to execute instructions to perform all or part of the acts in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the terminal 500. Examples of such data include instructions for any applications or methods operated on the terminal 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the terminal 500. The power component 506 may include a power management system, one or more power sources, and any other components associated with the generation, management, and distribution of power in the terminal 500.

The multimedia component 508 includes a screen providing an output interface between the terminal 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the terminal 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the terminal 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the terminal 500. For instance, the sensor component 514 may detect an open/closed status of the terminal 500, relative positioning of components, e.g., the display and the keypad, of the terminal 500, a change in position of the terminal 500 or a component of the terminal 500, a presence or absence of user contact with the terminal 500, an orientation or an acceleration/deceleration of the terminal 500, and a change in temperature of the terminal 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the terminal 500 and other devices. The terminal 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 518 of the terminal 500, to perform the methods for switching a display mode in the method embodiments shown in Fig. 1, Fig. 2, and Fig. 4. For example, the non-transitory computer-readable storage medium may be a ROM, a RAM, a CD-ROM, a magnetic tape, a floppy disc, an optical data storage device, and the like.

The terminology used in the present disclosure is for the purpose of describing exemplary embodiments only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if' may be understood to mean "when" or "upon" or "in response to" depending on the context.

Reference throughout this specification to "one embodiment," "an embodiment," "exemplary embodiment," or the like in the singular or plural means that one or more particular features, structures, or characteristics described in connection with an embodiment is included in at least one embodiment of the present disclosure. Thus, the appearances of the phrases "in one embodiment" or "in an embodiment," "in an exemplary embodiment," or the like in the singular or plural in various places throughout this specification are not necessarily all referring to the same embodiment. Furthermore, the particular features, structures, or characteristics in one or more embodiments may be combined in any suitable manner.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for switching a display mode, comprising:
obtaining a first display mode of an operating system (101); and
when the first display mode of the operating system is a night mode, switching a second display mode of an application to an application night mode (102, 203).

2. The method according to claim 1, wherein obtaining the first display mode of the operating system (101) comprises:
when the application starts up, inquiring the first display mode of the operating system (202); and/or
when the application is running, receiving a notification message sent from the operating system, and determining the first display mode of the operating system according to the notification message (204), wherein the notification message is sent by the operating system when the first display mode is switched.

3. The method according to claim 2, wherein determining the first display mode of the operating system according to the notification message (204) comprises:
when the notification message is received, inquiring the first display mode of the operating system (204a), wherein the notification message is used to trigger the application to inquire the first display mode of the operating system; or
obtaining the first display mode of the operating system by parsing the notification message (204b), wherein the notification message is used to notify the application of the first display mode of the operating system.

4. The method according to claim 2 or 3, before receiving a notification message sent from the operating system (204), further comprising:
when the application starts up, sending a statement to the operating system according to a preset identification in a header file of the application (201), wherein the statement is used to notify the operating system that the application supports the application night mode usable in the application.

5. The method according to any one of claim 1 to 4, wherein switching the second display mode of the application to an application night mode (102, 203) comprises:
transforming a hue of a user interface of the application to a preset hue according to mode parameters of the application night mode; and/or
adding a layer with a preset transparency on the user interface of the application;
wherein the preset hue corresponds to the application night mode.

6. The method according to any one of claims 1 to 5, after obtaining the first display mode of the operating system (101), further comprising:
when the first display mode of the operating system is a normal mode, switching the second display mode of the application to the normal mode (205).

7. A device for switching a display mode, comprising:
an obtaining module (310, 410), configured to obtain a first display mode of an operating system; and
a first switching module (320, 420), configured to switch a second display mode of an application to an application night mode when the first display mode of the operating system obtained by the obtaining module (310, 410) is a night mode.

8. The device according to claim 7, wherein the obtaining module (410) comprises:
an inquiring sub module (411), configured to inquire the first display mode of the operating system when the application starts up; and
a determining sub module (412), configured to receive a notification message sent from the operating system when the application is running, and to determine the first display mode of the operating system according to the notification message, wherein the notification message is sent by the operating system when the first display mode is switched.

9. The device according to claim 8, wherein the determining sub module (412) is configured to:
when the notification message is received, inquire the first display mode of the operating system, wherein the notification message is used to trigger the application to inquire the first display mode of the operating system; or
obtain the first display mode of the operating system by parsing the notification message, wherein the notification message is used to notify the application of the first display mode of the operating system.

10. The device according to claim 8 or 9, further comprising:
a stating module (430), configured to send a statement to the operating system according to a preset identification in a header file of the application when the application starts up, wherein the statement is used to notify the operating system that the application supports the application night mode usable in the application.

11. The device according to any one of claims 7 to 10, wherein the first switching module (320, 420) is configured to:
transform a hue of a user interface of the application to a preset hue according to mode parameters of the application night mode; and/or
add a layer with a preset transparency on the user interface of the application;
wherein the preset hue corresponds to the application night mode.

12. The device according to any one of claims 7 to 11, further comprising:
a second switching module (440), configured to switch the second display mode of the application to a normal mode when the first display mode of the operating system obtained by the obtaining module (310, 410) is the normal mode.

13. A device for switching a display mode, comprising:
a processor (518); and
a memory (504) for storing instructions executable by the processor (518);
wherein the processor (518) is configured to:
obtain a first display mode of an operating system; and
when the first display mode of the operating system is a night mode, switch a second display mode of an application to an application night mode.

14. A non-transitory computer-readable storage medium having stored therein instructions that, when executed by a processor, causes the processor to:
obtain a first display mode of an operating system; and
when the first display mode of the operating system is a night mode, switch a second display mode of an application to an application night mode.

15. A computer program, which when executing on a processor, performs a method according to any one of claims 1 to 6.
